# EUROPÄISCHE PATENTSCHRIFT

(11) **EP 1 717 884 B1**
(45) Veröffentlichungstag und Bekanntmachung des Hinweises auf die Patenterteilung: **27.02.2008**
(21) Anmeldenummer: 06112054.9
(22) Anmeldetag: 31.03.2006
(51) Int. Cl.: H01M 2/12

(54) **Entgasungsventil für Säurebatterien**
Vent plug for lead acid battery
Valve de dégazage pour accumulateurs au plomb

(30) Priorität: 26.04.2005 DE 102005019296
(43) Veröffentlichungstag der Anmeldung: 02.11.2006
(73) Patentinhaber: Deutsche Exide GmbH, 63654 Büdingen (DE)
(72) Erfinder: Kramm, Friedrich, 63654 Büdingen (DE); Recker, Christian, Dr., 63654 Büdingen (DE); Imhof, Wolfgang, 63699 Kefenrod-Helfersdorf (DE)
(74) Vertreter: Weber, Roland

(56) Entgegenhaltungen:
- EP-A- 0 462 403
- FR-A- 2 458 910
- US-A- 3 879 227
- US-A- 3 904 441
- US-A- 4 400 450
- US-A- 4 403 019

## Beschreibung

Die Erfindung betrifft ein Entgasungsventil, das insbesondere für Säurebatterien mit festgelegtem Elektrolyten geeignet ist. Des weiteren betrifft die Erfindung Säurebatterien mit einem oder mehreren solcher Entgasungsventile.

Säurebatterien (Akkumulatoren) werden in den vielfältigsten Bereichen eingesetzt, z.B. in Fahrzeugen als Starterbatterien oder als alleiniger Energiespeicher und -lieferant. Üblicherweise bestehen die Batterien aus einem oder mehreren Zellengefäßen mit darin eingesetzten Plattenblöcken, bestehend aus positiven und negativen Platten. Die Platten jedes Plattensatzes weisen von den Platten abstehende Fortsätze, sogenannten Fahnen, auf, welche über Polbrücken elektrisch miteinander verbunden sind. Die Polbrücken sind wiederum mit den Polen verbunden, welche üblicherweise durch Öffnungen (Poldurchführungen) im Deckel des Zellengefäßes für den elektrischen Anschluß der Batterie nach außen geführt werden. Die Platten sind im Zellengefäß von Elektrolyt umgeben, üblicherweise einem Säureelektrolyten auf der Grundlage von Schwefelsäure. Der Elektrolyt kann als Flüssigelektrolyt oder auch festgelegt in einem Gel als sogenannter Gelelektrolyt vorliegen. Als Gelbildner wird üblicherweise Kieselsäure verwendet.

Aufgrund der Gasentwicklung bei den elektrolytischen Vorgängen in der Batterie und zum Ausgleich von Druckschwankungen aufgrund von Wärmeentwicklung dürfen die Zellengefäße von Säurebatterien nicht gasdicht bzw. druckdicht verschlossen sein, sondern weisen ein oder mehrere Entgasungsventile auf. Durch die Entgasungsventile findet ein Druckausgleich zwischen dem Inneren der Zellengefäße und der Umgebung im Falle von hohem Druck in der Zelle gegenüber der Umgebung statt. Da der üblicherweise auf Schwefelsäure basierende Säureelektrolyt sehr aggressiv ist, sollen die Entgasungsventile so ausgelegt sein, daß beim Austreten von Gas aus dem Zellengefäß keine Säure als Flüssigkeit oder als Säurenebel mit dem Gas herausgetragen wird.

Säurebatterien werden auf dem Land-, See- und Schienenweg sowie per Luftfracht transportiert. Eine Batterie wird gemäß dieser Transportvorschriften als auslaufsicher (non-spillable) eingestuft, wenn sie unter anderem a) einen Vibrationstest und b) einen Unterdrucktest nach den folgenden Testvorschriften besteht.

### a) Vibrationstest

Die Batterie wird auf der Plattform einer Vibrationsvorrichtung befestigt, und es wird eine einfache harmonische Bewegung mit einer Amplitude von 0,8 mm (1,6 mm maximale Gesamtauslenkung) angewendet. Die Vibrationsfrequenz wird mit einer Rate von 1 Hz/min von 10 Hz bis 55 Hz und zurück auf 10 Hz variiert. Das Durchlaufen des gesamten Frequenzbereichs von der niedrigsten bis zur höchsten Frequenz und zurück findet in 95 ± 5 Minuten für jede einzelne Befestigungsposition (Vibrationsrichtung) der Batterie statt. Die Batterie muß in drei zueinander senkrechten Positionen getestet werden, wobei wenigstens eine Überkopfstellung eingeschlossen sein muß, bei der die Befüllöffnungen und Entgasungsventile der Batterie nach unten weisen.

### b) Unterdrucktest

Nach dem Vibrationstest wird die gleiche Batterie für 6 Stunden bei 24 ± 4°C gelagert, wobei sie einer Druckdifferenz von wenigstens 88 kPa ausgesetzt wird. Die Batterie wird abermals in drei zueinander senkrechten Positionen für wenigstens 6 Stunden in jeder Position getestet, wobei auch bei diesem Test wenigstens eine Überkopfposition hinsichtlich der Befüllungsöffnung und der Entgasungsventile eingeschlossen sein muß.

Da sich die Befüllöffnungen von Säurebatterien gut abdichten lassen, besteht die größte Gefahr des Austretens von Batteriesäure im Vibrationstest und im Unterdrucktest in den Überkopfpositionen. Die meisten herkömmlichen Entgasungsventile nach dem Stand der Technik erfüllen diese harten Anforderungen nicht.

Die EP 0 638 944 A1 beschreibt einen Verschlußstopfen für einen Bleiakkumulator, der das Austreten von Säurenebeln aus der Zelle verhindern und auch den schädigenden Einfluß der Säure auf die Funktion eines in dem Verschlußstopfen vorgesehenen Sicherheitsventils ausschließen soll. Der Verschlußstopfen umfaßt eine mikroporöse Fritte und ein Druckentlastungsventil in einem Gehäuse, das abgedichtet gegen den Zellendeckel in der Elektrolyteinfüllöffnung befestigbar ist. Die mikroporöse Fritte ist dem Druckentlastungsventil in Gasauslaßrichtung vorgelagert. Die mikroporöse Fritte ist dafür vorgesehen, feine Tröpfchen von Säureaerosol abzufangen, so daß der das Druckventil erreichende Gasstrom von der Flüssigkeit befreit wird und an den empfindlichen Metallteilen, wie Druckfedern und dergleichen, keine Korrosionsschäden anrichten kann. Es hat sich jedoch gezeigt, daß diese Anordnung unter harten Bedingungen, wie den oben beschriebenen Tests, ein Austreten von Säurenebeln nicht in ausreichendem Maß verhindern kann.

Die DE 39 34 687 C1 offenbart einen verschlossenen, wartungsfreien, in stehender und liegender Position verwendbaren Akkumulator mit einem festgelegten Elektrolyten. Im Deckel des Akkumulatorgehäuses ist eine Einfüllöffnung mit einem Überdruckventil vorgesehen. Zur Innenseite des Gehäuses hin ist an der Durchführungsöffnung ein Ansatz vorgesehen, von dem aus sich eine Rohrleitung parallel zur Deckelwand erstreckt und in dem oberen Bereich des Akkumulators in den Gasraum mündet. Der Weg von aus dem Akkumulator austretendem Gas führt somit durch die Rohrleitung zu dem Ansatz im Gehäusedeckel und dann durch das Überdruckventil nach außen. In liegender Position des Akkumulators muß die Rohrleitung mit ihrer Mündungsöffnung in vertikaler Richtung nach oben weisen, so daß geringe Flüssigkeitsmengen, die aus dem festgelegten Elektrolyten austreten, nicht in die hochstehende Mündung der Rohrleitung und damit aus dem Akkumulatorgehäuse heraus gelangen können.

Weitere Entgasungsventile und Verschlußstopfen für Akkumulatoren sind in den folgenden Druckschriften beschrieben: EP 0 920 063 A1, EP 0 756 338 A1, FR 2 576 149, EP 0 588 823 A1, GB 567 824, EP 1 001 905 A1, EP 0 875 949 B1, EP 0 588 823 A1, US 4,352,364, FR 2 674 376, FR 2 551 172, EP 0 554, 535 A1, EP 0 504 573, EP 0 222 447 A1, US-A-4,400,450, US-A-3,879,227.

Die bekannten Verschlußsysteme und Entgasungsventile haben entweder den Nachteil, daß sie keinen ausreichenden Schutz vor dem Austreten von Batteriesäure unter harten Bedingungen gewährleisten oder technisch sehr aufwendig und kompliziert aufgebaut sind oder beides.

Es ist daher eine Aufgabe der vorliegenden Erfindung, ein Entgasungsventil für eine Säurebatterie, insbesondere eine Säurebatterie mit festgelegtem Elektrolyten bereitzustellen, welches einfach und preiswert herzustellen ist und verbesserten Schutz gegen das Austreten von Batteriesäure liefert.

Gelöst wird diese Aufgabe durch ein Entgasungsventil für Säurebatterien mit einem im wesentlichen zylindrischen Stopfenteil, das für das Ineingriffbringen mit einer Zellenöffnung der Säurebatterie ausgelegt ist und das wenigstens eine das Zelleninnere der Säurebatterie mit der umgebenden Atmosphäre verbindende Durchgangsöffnung aufweist, wobei in der Durchgangsöffnung eine Ventilanordnung mit einem mit dem Zelleninneren kommunizierenden Einlaß und einem mit der umgebenden Atmosphäre in Verbindung stehenden Auslaß vorgesehen ist und wobei sich an die Durchgangsöffnung des Stopfenteils in Richtung des Zelleninneren wenigstens eine Wirbelkammer anschließt und sich an die Wirbelkammer eine gasdurchlässige Filtereinheit anschließt.

Das erfindungsgemäße Entgasungsventil bietet gegenüber herkömmlichen Ventilen erhebliche Vorteile. Wenn in einer Säurebatterie ein Überdruck entsteht, wird Gas aus dem Gasraum über dem Elektrolytniveau durch das Entgasungsventil aus dem Zellengefäß gedrückt. Dabei wird häufig Flüssigkeit, insbesondere Elektrolytsäure, mitgerissen. Die Batteriesäure kann Teile der Ventileinheit in dem Entgasungsventil angreifen und die Ventileinheit beschädigen und deren Funktion zerstören. Darüber hinaus kann austretende Batteriesäure Personen und Gegenstände, die damit in Berührung kommen schädigen bzw. verletzen. Bei in einem Gel festgelegten Elektrolyten (Gelelektrolyten) können auch kleine Gelteilchen und andere Feststoffe mit dem Gasstrom mitgerissen werden. Solche Gelteilchen und andere Feststoffe können das Entgasungsventil, insbesondere die Ventileinheit, zusetzen und die Funktion beeinträchtigen oder zunichte machen. Wenn das Entgasungsventil zugesetzt ist und keine Druckentlastung des Zellengefäßes mehr stattfinden kann, besteht die Gefahr,
daß das Zellengefäß an anderer Stelle aufplatzt oder bricht. Bei dem erfindungsgemäßen Entgasungsventil wird diese Gefahr gegenüber bekannten Ventilen erheblich gemindert.

Bei dem erfindungsgemäßen Entgasungsventil muß der Gasstrom zunächst die Filtereinheit passieren. Anschließend gelangt er in die in Gasströmungsrichtung dahinter angeordnete Wirbelkammer und von dieser durch das Ventil an die umgebende Atmosphäre.

Die Filtereinheit erfüllt zwei Funktionen. Zum einen werden Feststoffe, wie zum Beispiel Gel aus dem Gelelektrolyten, zurückgehalten und gelangen nicht in die Wirbelkammer und somit auch nicht in das Ventil. Dadurch wird verhindert, daß Feststoffe das Ventil verschließen. Darüber hinaus werden in der Filtereinheit von dem austretenden Gas mitgerissene Flüssigkeitstropfen oder Flüssigkeitsnebel abgeschieden, so daß sie nicht durch die Wirbelkammer in die Ventileinheit und durch diese an die umgebende Atmosphäre gelangen können. Es hat sich jedoch gezeigt, daß das Vorsehen einer Filtereinheit alleine häufig nicht ausreicht, um mitgerissene Flüssigkeit vollständig aus dem Gasstrom abzuscheiden. Oft tritt ein Teil der mitgerissenen Flüssigkeit noch durch die Filtereinheit hindurch, wo sie dann in das Ventil gelangen und darin entweder abgeschieden oder ganz nach außen in die umgebende Atmosphäre getragen wird. Erfindungsgemäß ist daher in Gasströmungsrichtung nach der Filtereinheit und vor dem Einlaß des Ventils eine Wirbelkammer vorgesehen, in welcher der Gasstrom noch einmal verwirbelt wird und sich restliche mitgerissene Flüssigkeit aus dem Gasstrom abscheidet. Die Menge an Flüssigkeit, die bis in das Ventil gelangt, kann dadurch sehr gering gehalten werden. Da es sich bei der mitgerissenen Flüssigkeit in der Regel um aggressive Batteriesäure handelt, wird dadurch ein Angriff auf die Bauteile des Ventils verringert und die Lebensdauer des Ventils erhöht. Darüber hinaus gelangt erheblich weniger der aggressiven Batteriesäure an die umgebende Atmosphäre als dies bei herkömmlichen Entgasungsventilanordnungen der Fall ist.

In einer bevorzugten Ausführungsform der Erfindung, die anmeldungsgemäß als Zweikammersystem bezeichnet wird, schließt sich an die Wirbelkammer eine Filterkammer an, die über eine oder mehrere Durchgangsöffnungen mit der Wirbelkammer in Verbindung steht und in welcher die Filtereinheit angeordnet ist. Die Filterkammer besitzt eine oder mehrere Einlaßöffnungen, die in Verbindung mit dem Gasraum über dem Elektrolytniveau in dem Zellengefäß stehen. Zwischen der Einlaßöffnung bzw. den Einlaßöffnungen der Filterkammer und der Auslaßöffnung bzw. den Auslaßöffnungen in die Wirbelkammer ist die Filtereinheit so angeordnet, daß durch die Filterkammer hindurchströmendes Gas zwangsweise durch die Filtereinheit hindurchströmt. Zweckmäßigerweise ist die Filtereinheit so ausgelegt, daß sie die gesamte Filterkammer ausfüllt. Erfindungsgemäß ist die Filtereinheit aus einem oder mehreren gasdurchlässigen, porösen Körpern hergestellt, wobei der Begriff poröser Körper im Sinn dieser Erfindung breit verstanden wird und vorzugsweise eine Fritte, einen Schaumstoff, ein Vlies, eine poröse Membran, ein Filterpapier oder ein Gewebe umfaßt. Im Fall von lagenartigem Material, wie einer Membran, Filterpapier oder Gewebe, kann die Filtereinheit aus mehreren übereinandergeschichteten Lagen eines solchen Materials aufgebaut sein. Es können auch verschiedene solcher poröser Körper bzw. poröser Materialien miteinander kombiniert zu der Filtereinheit zusammengefügt sein. Zum Beispiel kann die Filtereinheit ein in Gasströmungsrichtung aufeinanderfolgend eine Membran oder ein Filterpapier, anschließend ein Vliesmaterial und darauf folgend erneut eine Membran oder ein Filterpapier umfassen. Die Filtereinheit sollte ausreichend gasdurchlässig sein, so daß ein Über- oder Unterdruck in der Säurebatterie schnell abgebaut werden kann. Sie sollte aber auch eine Porosität aufweisen, die eine gute Filtrationswirkung und ausreichend Fläche zum Abscheiden von Flüssigkeit bietet.

In einer zum Zweikammersystem alternativen Ausführungsform, das anmeldungsgemäß als Einkammersystem bezeichnet wird, ist die Filtereinheit vor der Einlaßöffnung der Wirbelkammer befestigt. In diesem Fall ist für die Filtereinheit keine separate Filterkammer vorgesehen. Die Befestigung der Filtereinheit vor der Einlaßöffnung der Wirbelkammer kann auf verschiedene Weisen erfolgen, zum Beispiel durch Anheften an die Bodenplatte der Wirbelkammer im Bereich um die Einlaßöffnung herum mittels eines Klebstoffs oder durch Anschweißen. Alternativ kann die Filtereinheit auch in der Form einer Kappe ausgebildet sein, die über das Ende der Wirbelkammer gestülpt wird und sich über die Einlaßöffnung der Wirbelkammer erstreckt. Alternativ kann auch eine beispielsweise aus Kunststoff hergestellte Kappe verwendet werden, in welche das Material der Filtereinheit eingesetzt wird und die anschließend über das untere Ende der Wirbelkammer gestülpt und an diesem befestigt wird. Die Befestigung einer solchen Kappe kann beispielsweise durch einen Schraubverschluß oder einen Klippverschluß erfolgen. In diesem Fall sind die Außenseite des Endes der Wirbelkammer und die Innenseite der Kappe entsprechend mit einem Gewinde oder Einrasteinrichtungen versehen. Um ein Durchströmen der in eine solche Kappe eingesetzten Filtereinheit zu gewährleisten, weist die Kappe eine oder mehrere Einlaßöffnungen auf. Diese Ausführungsform hat den weiteren Vorteil, daß die Kappe abgenommen und die Filtereinheit einfach ausgetauscht werden kann.

Üblicherweise werden Entgasungsventile im Deckel des Zellengefäßes einer Säurebatterie neben den Poldurchführungen angeordnet. Hierfür ist eine entsprechende Bohrung bzw. ein Ventilsitz vorgesehen. Vorteilhafterweise ist die Bohrung bzw. der Ventilsitz mit einem Innengewinde und das Entgasungsventil am Stopfenteil mit einem Außengewinde versehen, so daß das Entgasungsventil fest und sicher plaziert werden kann. Zwischen der Bohrung bzw. dem Ventilsitz und dem Entgasungsventil ist zweckmäßigerweise noch eine Dichtung, zum Beispiel ein O-Ring, vorgesehen, um zu verhindern, daß Gas oder Flüssigkeit an dem Entgasungsventil vorbei austreten kann.

Obwohl das Entgasungsventil im wesentlichen jeden Querschnitt haben kann, ist die zylindrische Form zum Beispiel für die Schraubverbindung des Entgasungsventils mit der Öffnung bzw. dem Ventilsitz am geeignetsten. Wenigstens das Stopfenteil, welches mit der Öffnung bzw. dem Ventilsitz in Eingriff gebracht wird, besitzt eine im wesentlichen zylindrische Form. Die sich daran anschließende Wirbelkammer und/oder die Filterkammer sind für eine direkte Befestigung an dem Stopfenteil daher vorteilhafterweise ebenfalls im wesentlichen zylindrisch ausgebildet.

Bei einer besonders vorteilhaften Ausführungsform des erfindungsgemäßen Entgasungsventils sind in der Wirbelkammer Verwirbelungskörper angeordnet, die für eine Umlenkung und Verwirbelung eines durch die Wirbelkammer hindurchtretenden Gasstroms ausgelegt sind. Solche Verwirbelungskörper können schüttfähige, nicht fest an der Wirbelkammerwand befestigte Körper jeder Geometrie sein. Geeignet sind jedoch auch sich von der Wirbelkammerwand erstreckende Verwirbelungskörper, wie Ablenkplatten, Lochplatten und ähnliches, welche den Gasstrom innerhalb der Wirbelkammer verwirbeln und/oder umlenken.

Die Erfindung umfaßt auch eine Säurebatterie mit wenigstens einem Entgasungsventil der vorbeschriebenen Art. Vorzugsweise enthält die Säurebatterie einen festgelegten Elektrolyten, zweckmäßigerweise einen Gelelektrolyten. Das Niveau des festgelegten Elektrolyten innerhalb des Zellengefäßes ist üblicherweise so hoch, daß es bis über die Elektrodenplatten reicht und oberhalb dieses Niveaus bis zum Deckel des Zellengefäßes ein Gasraum verbleibt. Bei dieser Ausführungsform von Säurebatterien treten nur geringe Flüssigkeitsmengen aus dem festgelegten Elektrolyten aus, die dann bei ausströmendem Gas mitgerissen werden können. Solche Säurebatterien können mit dem erfindungsgemäßen Entgasungsventil auch liegend oder Überkopf betrieben werden.

Weitere Vorteile, Merkmale und Ausführungsformen der Erfindung werden anhand der nachfolgenden Beschreibung und der anhängenden Figuren deutlich.
- Figur 1: zeigt einen Vertikalschnitt durch eine Säurebatterie mit einem als Zweikammersystem ausgebildeten erfindungsgemäßen Entgasungsventil.
- Figur 2: zeigt das Entgasungsventil gemäß Figur 1 in vergrößerter Darstellung.
- Figur 3: zeigt das Entgasungsventil gemäß den Figuren 1 und 2, wobei die Ventilanordnung im Stopfenteil ebenfalls im Schnitt detailliert dargestellt ist.
- Figur 4: zeigt eine als Einkammersystem ausgebildete alternative Ausführungsform des erfindungsgemäßen Entgasungsventils

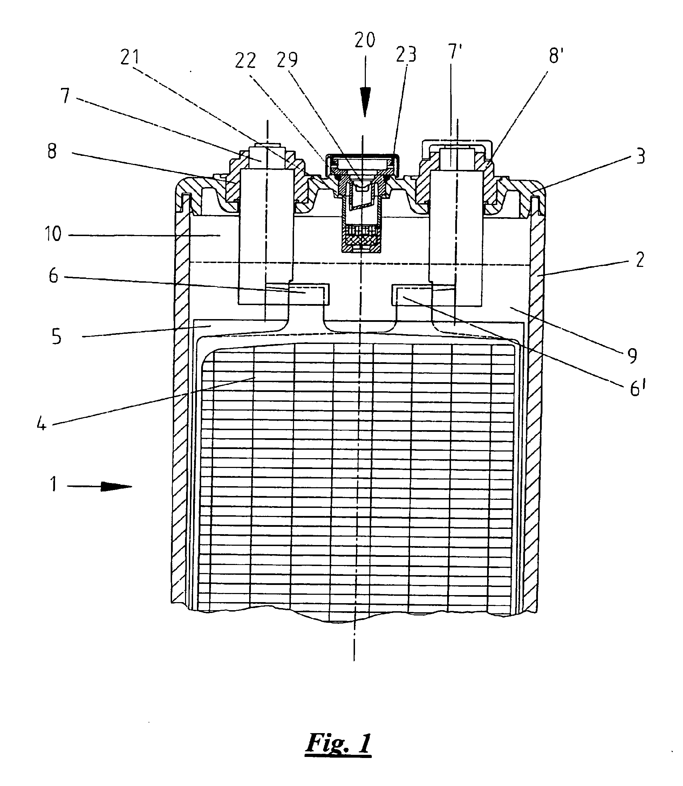

Figur 1 zeigt in vertikaler Schnittansicht eine Säurebatterie 1 mit einem Zellengefäß 2, das mit einem Deckel 3 verschlossen ist. Im Zellengefäß befinden sich in der üblichen Weise die Elektrodenplatten 4. Separatoren 5 sind zwischen den Elektrodenplatten 4 angeordnet, um diese in einem Abstand voneinander zu halten und zu verhindern, daß sie einander berühren. Von jeder Elektrodenplatte 4 erstreckt sich vertikal nach oben ein Abschnitt, die sogenannte Fahne. Die Fahnen der positiven Platten und die Fahnen der negativen Platten sind jeweils über Polbrücken 6 bzw. 6' elektrisch miteinander verbunden. Die Polbrücken 6 bzw. 6' sind wiederum mit den Polen 7 bzw. 7' verbunden, die sich durch Poldurchführungen 8 bzw. 8' durch den Deckel 3 aus dem Zellengefäß heraus erstrecken. Das Zellengefäß 2 der Säurebatterie 1 gemäß Figur 1 ist mit einem Gelelektrolyten 9 befüllt. Über dem Gelelektrolyten 9 befindet sich bis zum Deckel 3 ein Gasraum 10.

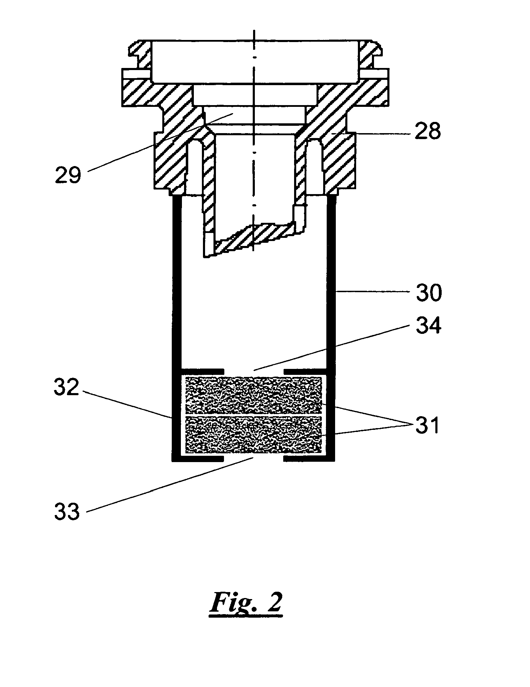

Im Deckel 3 der Säurebatterie 1 ist ein erfindungsgemäßes Entgasungsventil 20 angeordnet. Das Entgasungsventil 20 gemäß Figur 1 ist in Figur 2 vergrößert dargestellt. Das Entgasungsventil 20 umfaßt ein Stopfenteil 28 mit einem Außengewinde (nicht dargestellt), über welches das Entgasungsventil 20 in einen in dem Deckel 3 vorgesehenen Ventilsitz 21 mit Innengewinde (nicht dargestellt) eingeschraubt ist. Ein Dichtungsring 22 dichtet das eingeschraubte Stopfenteil 28 gegenüber dem Ventilsitz 21 zusätzlich gegen Austreten von Gas oder Flüssigkeit ab. Über dem Entgasungsventil ist zusätzlich eine Schutzabdeckung 23 vorgesehen.

Im Innenraum des im wesentlichen zylinderförmigen Stopfenteils 28 ist eine Ventilanordnung 29 angeordnet, die nach jeder im Stand der Technik bekannten Art und Weise ausgestaltet sein kann. Vom Stopfenteil 28 erstreckt sich in Richtung des Inneren der Batterie eine Wirbelkammer 30, an die sich wiederum eine Filterkammer 32 anschließt. In der Filterkammer 32 ist eine aus zwei übereinander angeordneten als Vliesstücken ausgebildete Filtereinheit 31 vorgesehen. Die Filterkammer 32 weist eine Gaseintrittsöffnung 33 an ihrem unteren Ende auf und ist über eine Verbindungsöffnung 34 mit der Wirbelkammer 30 verbunden.

Bei einem Überdruck in der Säurebatterie strömt Gas durch die Gaseintrittsöffnung 33 der Filterkammer 32 durch die Filtereinheit 31 und von dieser durch die Verbindungsöffnung 34 und durch die Wirbelkammer 30 weiter durch die Ventilanordnung 29 aus dem Zellengefaß heraus. Von dem Gasstrom mitgerissene Flüssigkeit und Feststoffe werden zunächst von der Filtereinheit 31 zurückgehalten. Restliche Flüssigkeit, die von der Filtereinheit 31 nicht zurückgehalten wird, wird mit dem Gasstrom in der Wirbelkammer 30 verwirbelt und scheidet sich in der Wirbelkammer 30 ab. Der zu der Ventilanordnung 29 gelangende Gasstrom ist daher im wesentlichen flüssigkeitsfrei.

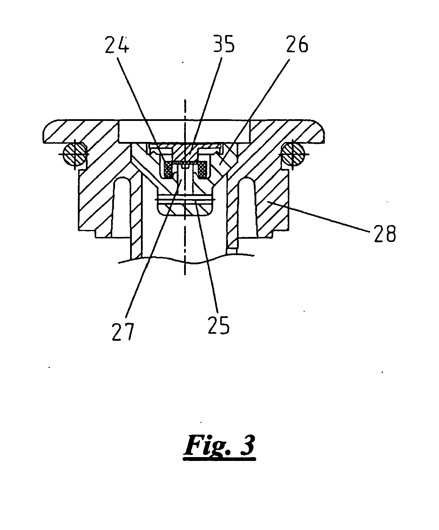

Figur 3 zeigt eine Detailansicht des Entgasungsventils 20, wobei die Ventilanordnung 29 im Querschnitt dargestellt ist und die inneren Bauteile der Ventilanordnung zu erkennen sind. Die Ventilanordnung umfaßt einen Ventilkörper 26, einen quer zur Hauptströmungsrichtung des Gases verlaufenden Einlaßkanal 25, einen sich daran anschließenden, wiederum in der Hauptströmungsrichtung des Gases verlaufenden Kanal 27, der in einer Kammer mündet, und eine Membran 24, die so ausgelegt ist, daß das Ventil erst bei einem vorgegebenen Überdruck öffnet. Über der Membran ist ein Niederhalter 35 angeordnet, der die Anpreßkraft der Membran auf die Dichtfläche und damit den Öffnungsdruck bestimmt.

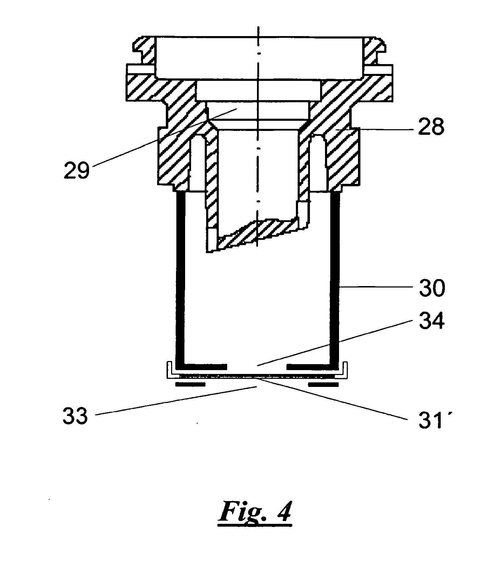

Figur 4 zeigt eine alternative Ausführungsform des erfindungsgemäßen Entgasungsventils als Einkammersystem. Der Aufbau des Stopfenteils 28, der darin vorgesehenen Ventileinheit 29 und der sich an das Stopfenteil anschließenden Wirbelkammer 30 ist im wesentlichen wie bei der Ausführungsform gemäß den Figuren 1 bis 3 ausgestaltet. Vor der Einlaßöffnung der Wirbelkammer 30 ist eine kappenförmig ausgebildete Filtereinheit 31' angeordnet, die über das Ende der Wirbelkammer gestülpt ist. Die kappenförmig ausgebildete Filtereinheit 31 kann an das Ende der Wirbelkammer mittels eines Klebstoffs angeheftet sein. Alternativ kann sie mittels eines Schraub- oder Clipverschlusses an dem Ende der Wirbelkammer befestigt sein.

### Bezugszeichenliste

- 1: Säurebatterie, Akkumulator
- 2: Zellengefäß
- 3: Deckel
- 4: Platte
- 5: Separator
- 6, 6': Polbrücken
- 7, 7': Pole
- 8, 8': Poldurchführungen
- 9: Elektrolyt
- 10: Gasraum
- 20: Entgasungsventil
- 21: Ventilsitz
- 22: Dichtungsring
- 23: Schutzabdeckung
- 24: Membran
- 25: Einlaßkanal
- 26: Ventilkörper
- 27: Kanal
- 28: Stopfenteil
- 29: Ventilanordnung, Druckventil
- 30: Wirbelkammer
- 31, 31': Filtereinheit
- 32: Filterkammer
- 33: Gaseintrittsöffnung zum Zelleninnenraum
- 34: Gasdurchtrittsöffnung vom Filter zur Wirbelkammer
- 35: Niederhalter

## Patentansprüche

1. Entgasungsventil für Säurebatterien mit einem im wesentlichen zylindrischen Stopfenteil (28), das für das Ineingriffbringen mit einer Zellenöffnung der Säurebatterie (1) ausgelegt ist und das wenigstens eine das Zelleninnere der Säurebatterie mit der umgebenden Atmosphäre verbindende Durchgangsöffnung aufweist, wobei in der Durchgangsöffnung eine Ventilanordnung (29) mit einem mit dem Zelleninneren kommunizierenden Einlaß und einem mit der umgebenden Atmosphäre in Verbindung stehenden Auslaß vorgesehen ist, **dadurch gekennzeichnet, daß** sich an die Durchgangsöffnung des Stopfenteils (28) in Richtung des Zelleninneren wenigstens eine Wirbelkammer (30) anschließt und sich an die Wirbelkammer (30) eine gasdurchlässige Filtereinheit (31, 31') anschließt.

2. Entgasungsventil nach Anspruch 1, **dadurch gekennzeichnet, daß** sich an die Wirbelkammer (30) eine Filterkammer (32) anschließt, die über eine oder mehrere Durchgangsöffnungen (34) mit der Wirbelkammer in Verbindung steht und in welcher die Filtereinheit (31, 31') angeordnet ist.

3. Entgasungsventil nach Anspruch 1, **dadurch gekennzeichnet, daß** die Filtereinheit (31, 31') vor der Einlaßöffnung der Wirbelkammer (30) befestigt, vorzugsweise aufgesteckt und/oder angeheftet ist.

4. Entgasungsventil nach einem der vorangegangenen Ansprüche, **dadurch gekennzeichnet, daß** die Filtereinheit (31, 31') aus einem oder mehreren porösen Körpern, vorzugsweise Fritte, Schaumstoff, Vlies, Membran, Filterpapier oder Gewebe hergestellt ist.

5. Entgasungsventil nach einem der vorangegangenen Ansprüche, **dadurch gekennzeichnet, daß** die Wirbelkammer (30) und/oder die Filterkammer im wesentlichen zylindrisch ausgebildet sind.

6. Entgasungsventil nach einem der vorangegangenen Ansprüche, **dadurch gekennzeichnet, daß** in der Wirbelkammer (30) Verwirbelungskörper angeordnet sind, die für eine Umlenkung und Verwirbelung eines durch die Wirbelkammer (30) hindurchtretenden Gasstromes ausgelegt sind.

7. Säurebatterie mit wenigstens einem Entgasungsventil nach einem der vorangegangenen Ansprüche.

8. Säurebatterie nach Anspruch 7, **dadurch gekennzeichnet, daß** sie einen festgelegten Elektrolyten, vorzugsweise einen Gelelektrolyten enthält.

## Claims

1. A vent valve for acid batteries comprising a substantially cylindrical plug portion (28) which is designed for being brought into engagement with a cell opening of the acid battery (1) and which has at least one passage opening communicating the cell interior of the acid battery with the ambient atmosphere, wherein provided in the passage opening is a valve arrangement (29) having an inlet communicating with the cell interior and an outlet connected to the ambient atmosphere, **characterised in that** at least one turbulence chamber (30) follows the passage opening of the plug portion (28) in the direction of the cell interior and a gas-permeable filter unit (31, 31') follows the turbulence chamber (30).

2. A vent valve according to claim 1 **characterised in that** adjoining the turbulence chamber (30) is a filter chamber (32) which is in communication with the turbulence chamber by way of one or more passage openings (34) and in which the filter unit (31, 31') is arranged.

3. A vent valve according to claim 1 **characterised in that** filter unit (31, 31') is fixed upstream of the inlet opening of the turbulence chamber (30), preferably being push-fitted thereon and/or bonded thereto.

4. A vent valve to one of the preceding claims **characterised in that** filter unit (31, 31') is made from one or more porous bodies, preferably frit, foam, non-woven fabric, diaphragm, filter paper or cloth.

5. A vent valve according to one of the preceding claims **characterised in that** the turbulence chamber (30) and/or the filter chamber is of a substantially cylindrical configuration.

6. A vent valve according to one of the preceding claims **characterised in that** arranged in the turbulence chamber (30) are turbulence-producing bodies which are designed for deflection of and producing turbulence in a gas flow passing through the turbulence chamber (30).

7. An acid battery comprising at least one vent valve according to one of the preceding claims.

8. An acid battery according to claim 7 **characterised in that** it includes a fixed electrolyte, preferably a gel electrolyte.

## Revendications

1. Clapet de dégazage pour accumulateur à électrolyte acide, le clapet comportant une pièce formant bouchon sensiblement cylindrique qui est conçue pour être introduite dans l'ouverture d'un élément de l'accumulateur à électrolyte acide (1) et qui comporte au moins une ouverture de passage reliant l'intérieur de l'élément de l'accumulateur à électrolyte acide à l'atmosphère environnante, un dispositif à clapet (29) étant prévu dans l'ouverture de passage et comportant une entrée communiquant avec l'intérieur de l'élément et une sortie en liaison avec l'atmosphère environnante, **caractérisé en ce qu'**au moins une chambre de turbulence est raccordée à l'ouverture de passage de la pièce formant bouchon (28) en direction de l'intérieur de l'élément et **en ce qu'**une unité de filtrage (31, 31') perméable aux gaz est raccordée à la chambre de turbulence (30).

2. Clapet de dégazage selon la revendication 1, **caractérisé en ce qu'**une chambre de filtrage 32) est raccordée à la chambre de turbulence (30), laquelle chambre de filtrage est en liaison avec la chambre de turbulence par une ou plusieurs ouvertures de passage (34) et renferme l'unité de filtrage (31, 31').

3. Clapet de dégazage selon la revendication 1, **caractérisé en ce que** l'unité de filtrage (31, 31') est fixée, avantageusement montée et/ou collée, en avant de l'ouverture d'entrée de la chambre de turbulence (30).

4. Clapet de dégazage selon l'une des revendications précédentes, **caractérisé en ce que** l'unité de filtrage (31, 31') est fabriquée à partir d'un ou plusieurs corps poreux, avantageusement de fritte, de mousse, de nappe, de membrane, de papier filtre ou de tissu.

5. Clapet de dégazage selon l'une des revendications précédente, **caractérisé en ce que** la chambre de turbulence (30) et/ou la chambre de filtrage ont une conformation sensiblement cylindrique.

6. Clapet de dégazage selon l'une des revendications précédentes, **caractérisé en ce que** des corps générateurs de tourbillons sont disposés dans la chambre à turbulence (30) et sont conçus pour dévier et faire tourbillonner un flux de gaz circulant à travers la chambre de turbulence (30).

7. Accumulateur à électrolyte acide comportant au moins un clapet de dégazage selon l'une des revendications précédentes.

8. Accumulateur à électrolyte acide selon la revendication 7, **caractérisé en ce qu'**elle contient un électrolyte déterminé, avantageusement un électrolyte gélifié.
